# EUROPÄISCHE PATENTSCHRIFT

(11) **EP 2 208 863 B1**
(45) Veröffentlichungstag und Bekanntmachung des Hinweises auf die Patenterteilung: **13.04.2016**
(21) Anmeldenummer: 10150403.3
(22) Anmeldetag: 11.01.2010
(51) Int. Cl.: F01D 17/16, F02C 6/12

(54) **Turbolader mit variabler Turbinengeometrie**
Turbo charger with variable turbine geometry
Turbosoufflante dotée d'une géométrie de turbine variable

(30) Priorität: 15.01.2009 DE 102009004737
(43) Veröffentlichungstag der Anmeldung: 21.07.2010
(73) Patentinhaber: Bosch Mahle Turbo Systems GmbH & Co. KG, 70376 Stuttgart (DE)
(72) Erfinder: Stein, Matthias, 70825 Korntal-Münchingen (DE); Wengert, Andreas, 71549 Auenwald (DE); Tries, Timo, 71701 Schwieberdingen (DE)
(74) Vertreter: BRP Renaud & Partner mbB Rechtsanwälte Patentanwälte Steuerberater

(56) Entgegenhaltungen:
- EP-A1- 1 394 363
- WO-A1-2007/104535
- WO-A1-2007/107289
- WO-A2-2008/036862
- WO-A2-2009/003144
- US-A- 4 659 295

## Beschreibung

Die Erfindung bezieht sich auf einen Turbolader mit variabler Turbinengeometrie, wobei in einem Turbinengehäuse innerhalb eines das Turbinenrad ringförmig umschließenden Radialspaltes für zum Turbinenrad strömende Ab- bzw. Treibgase verstellbare Leitschaufeln an einem eine Radialwand des Radialspaltes bildenden Trägerring um zur Turbinenradachse im Wesentlichen parallele Achsen schwenkbar gelagert sind und der axial bewegliche Trägerring von einer Anschubfederung axial gegen Anschläge an der gegenüberliegenden Radialwand gespannt wird.

Zur Erhöhung der Leistung der Motoren werden Kraftfahrzeuge serienmäßig mit derartigen Turboladern ausgerüstet. Die verstellbaren Leitschaufeln lassen sich einerseits in eine Lage bringen, in der die Leitschaufelebenen etwa tangential zum Turbinenrad ausgerichtet sind, andererseits ist eine Lage einstellbar, in der die Leitschaufelebenen in Achsansicht des Turbinenrades etwa radial zur Turbinenradachse ausgerichtet sind. Die erstgenannte Lage wird eingestellt, wenn der Abgasstrom des Motors gering ist. Die andere Lage ist für einen Betriebszustand mit hohem Abgasstrom vorgesehen. Im Ergebnis kann auf diese Weise ein guter Wirkungsgrad der Turbine unabhängig von der Stärke des Stromes der Ab- bzw. Treibgase gewährleistet werden.

Die Leitschaufelanordnung, d.h. die variable Turbinengeometrie (VTG) kann konstruktiv als Kartusche wie z.B. in WO 2007/104535 oder Korb oder in anderer Weise ausgebildet sein.

Beim Betrieb des Turboladers herrschen im Radialspalt sehr hohe Temperaturen, das heißt alle an den Radialspalt angrenzenden bzw. im Radialspalt angeordneten Elemente oder Organe werden thermisch außerordentlich stark belastet. Deshalb muss damit gerechnet werden, dass am bzw. im Radialspalt durch thermische Materialdehnungen größere Änderungen der Maße auftreten. Um durch Maßänderungen verursachte Verspannungen an großen, einstückig zusammenhängenden Baugruppen zu vermeiden, ist es zweckmäßig, die die Radialwände des Radialspaltes bildenden Wände zu segmentieren, und den Zusammenhalt der Segmente durch federnde Verspannung zu bewirken. Damit kann sich jedes Segment unabhängig von angrenzenden Segmenten temperaturabhängig verändern. Deshalb ist die eingangs angegebene Bauweise mit einem von einer Anschubfederung gegen Anschläge gespannten Trägerring vorteilhaft.

Allerdings kann diese Bauweise gleichwohl noch zu Problemen führen, weil der Trägerring bei hoher thermischer Belastung durch die ihn beaufschlagenden Kräfte und Gegenkräfte der Anschubfederung sowie der Anschläge mehr oder weniger stark verformt werden kann. Dies führt dazu, dass sich zwischen den trägerringseitigen Rändern der Leitschaufeln und der diesen Rändern gegenüberliegenden Wand des Trägerrings Spalte ausbilden können, durch die ein größerer Gasstrom hindurchtritt, so dass die Steuerwirkung der Leitschaufeln herabgesetzt wird. Im Ergebnis kann damit der Wirkungsgrad des Turboladers deutlich verschlechtert werden. Andererseits kann auch der umgekehrte Fall eintreten, d.h. die Leitschaufeln können verklemmen.

Deshalb ist es Aufgabe der Erfindung, eine Konstruktion zu schaffen, bei der die Seitenränder der Leitschaufeln einerseits dicht an die Radialwände des Radialspaltes anschließen und andererseits eine Verklemmung der Leitschaufeln vermieden wird.

Diese Aufgabe wird erfindungsgemäß dadurch gelöst, dass die Anschubfederung den Trägerring innerhalb einer den Anschlägen radial bzw. tangential benachbarten Ringzone auf der von den Anschlägen abgewandten Seite des Trägerrings beaufschlagt.

Die Erfindung beruht auf dem allgemeinen Gedanken, die Zonen, an denen einerseits von der Anschubfederung und andererseits von den Anschlägen Kräfte auf den Trägerring abgetragen werden, möglichst eng benachbart zueinander anzuordnen, so dass der Trägerring von diesen Kräften nur noch in geringem oder verschwendendem Maße auf Biegung beansprucht wird.

Gemäß einer bevorzugten Ausführungsform der Erfindung kann vorgesehen sein, dass als Anschubfederung eine Kragfeder vorgesehen ist, die mit einem radial inneren Bereich gegen eine dem Turbinenrad zugewandte Gehäusefläche und mit sternförmig angeordneten, blattfederartigen radialen Kragarmen gegen den Trägerring gespannt ist.

Eine derartige Anschubfederung lässt sich auch bei vorzugsweise vorgesehener rotationssymmetrischer Form ohne weiteres an die umfangreichen Störkonturen anpassen, die auf der von den Leitschaufeln abgewandten Seite des Trägerrings von den Steuerelementen und -organen für die Schwenkverstellung der Leitschaufeln gebildet werden. Gleichzeitig wird der Vorteil geboten, dass die Anschubfederung durch ein einteilig zusammenhängendes Bauteil gebildet wird.

Die Anschubfeder bildet also eine "offene Wand", die einen Gasaustausch auf der von Radialspalt abgewandten Seite des Trägerrings nicht behindern kann. Wenn eine Abdichtung dieses Raumes gegenüber dem Radialspalt notwendig oder erwünscht ist, wird eine von der Anschubfeder gesonderte Dichtung zwischen Trägerring und benachbarten Gehäuseteilen des Turboladers vorgesehen.

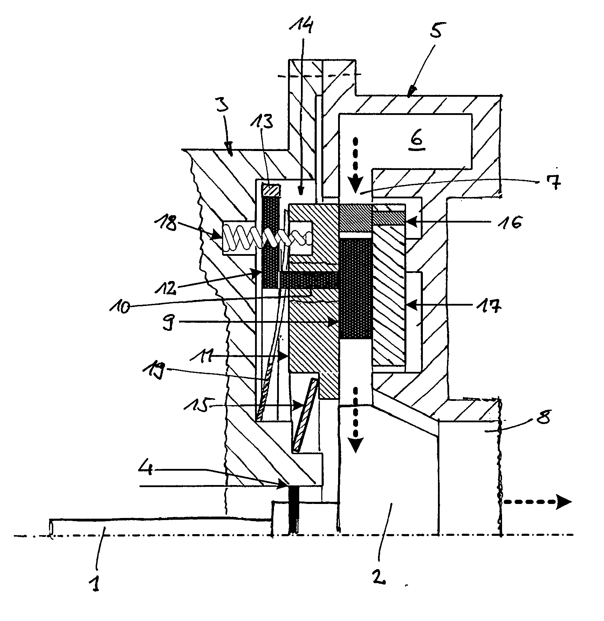

In zweckmäßiger Ausgestaltung der Erfindung sind die Kragarme in Umfangsrichtung des Trägerrings jeweils zwischen benachbarten Schwenkachsen der Leitschaufeln angeordnet. Im Übrigen wird hinsichtlich bevorzugter Merkmale der Erfindung auf die Ansprüche und die nachfolgende Erläuterung der Zeichnung verwiesen, anhand der bevorzugte Ausführungsformen der Erfindung näher erläutert werden.

Schutz wird nicht nur für angegebene oder dargestellte Merkmalskombinationen, sondern auch für prinzipiell beliebige Kombinationen der angegebenen oder dargestellten Einzelmerkmale beansprucht.

In der Zeichnung zeigt die einzige Figur einen axialen Halbschnitt eines Turboladers im Bereich seines Turbinenrades.

Gemäß der Zeichnung besitzt der erfindungsgemäße Turbolader in grundsätzlicher bekannter Weise eine Rotorwelle 1, die an ihrem einen Ende drehfest mit einem Verdichterrad (nicht dargestellt) und mit ihrem anderen Ende drehfest mit einem Turbinenrad 2 verbunden ist. Die Rotorwelle 1 ist in einem nur teilweise dargestellten Lagergehäuse 3 drehgelagert, wobei die turbinenradseitigen Lager zum Turbinenrad 2 hin durch eine Dichtung 4 abgeschlossen sind.

Das Turbinenrad 2 ist in einem an das Lagergehäuse 3 angeflanschten Turbinengehäuse 5 untergebracht, welches einen das Turbinenrad 2 ringförmig umschließenden Spiralraum 6 aufweist, in den die das Turbinenrad 2 treibenden Ab- bzw. Treibgase in Umfangsrichtung einströmen und aus dem diese Gase durch einen ringförmigen Radialspalt 7 zum Turbinenrad 2 abströmen, bevor sie in axialer Richtung aus einem Auslass 8 des Turbinengehäuses 5 ausströmen. Innerhalb des Radialspaltes 7 sind schwenkverstellbare Leitschaufeln 9 angeordnet, die sich zwischen einer ersten Endlage und einer zweiten Endlage schwenken lassen.

Die erste Endlage, in der die Leitschaufeln einen nahezu geschlossenen Ring bilden, ist für sehr kleine Ab- bzw. Treibgasströme vorgesehen, während die zweite Endlage der Leitschaufeln 9 bei großen Ab- bzw. Treibgasströmen eingestellt wird. Je nach Stärke der Ab- bzw. Treibgasströme werden unterschiedliche Zwischenlagen zwischen den vorgenannten Endlagen eingestellt.

Auf diese Weise kann die Turbinengeometrie stromabhängig variiert werden, so dass ein hoher Wirkungsgrad erreichbar ist.

Die Leitschaufeln 9 sind mit an ihnen drehfest angeordneten Achsen 10, die parallel zur Turbinenradachse ausgerichtet sind und einen die eine Radialwand des Radialspaltes 7 bildenden Trägerring 11 durchsetzen, im Trägerring 11 schwenkgelagert. An ihren von den Leitschaufeln 9 abgewandten Enden sind die Achsen 10 jeweils mit einem Schwenkhebel 12 drehfest verbunden, dessen freies Ende mit einem zur Turbinenradachse zentrischen Steuerring 13 gekoppelt ist, so dass die Schwenkhebel 12 und damit die Leitschaufeln 9 einen Schwenkhub ausführen, wenn der Steuerring 13 einen Drehhub bezüglich der Turbinenradachse ausführt. Grundsätzlich kann der Verstellapparat der Leitschaufeln auch auf andere Weise ausgeführt sein, um eine Simultanverstellung aller Leitschaufeln zu ermöglichen.

Die Schwenkhebel sowie der Steuerring 12, 13 sind in einem zwischen dem Trägerring 11 und der zugewandten Stirnseite des Lagergehäuses 3 ausgesparten Steuerraum 14 untergebracht, der durch den Trägerring 11 vom Radialspalt 7 abgeschirmt wird. Am radial inneren Bereich des Trägerringes 11 ist der Steuerraum 14 durch eine zwischen dem Lagergehäuse 3 und dem Trägerring 11 angeordnete Dichtung 15, die nach Art einer sehr schwachen Tellerfeder ausgebildet sein kann, gasdicht abgesperrt, so dass der Steuerraum 14 keinen Bypass-Weg parallel zum Radialspalt 7 für die Ab- bzw. Treibgas bilden kann. Die Federkraft der Dichtung 15 ist vorzugsweise so gering bemessen, dass diese Kraft lediglich ausreicht, die Dichtung 15 zwischen Lagergehäuse und Trägerring festzuhalten. Der Trägerring 11 wird durch eine Anschubfederung axial gegen Anschläge 16 gespannt, die auf der vom Trägerring 11 abgewandten Seite des Radialspaltes 7 angeordnet sind. Gemäß einer bevorzugten Ausführungsform der Erfindung wird die dem Trägerring 11 gegenüberliegende Radialwand des Radialspaltes 7 durch eine ringscheibenförmige Deckscheibe 17 gebildet, an der die vorgenannten Anschläge 16 angeordnet sind, und die durch die Anschubfederung des Trägerringes 11 axial gegen Widerlager am Turbinengehäuse 5 gespannt wird. Zusätzlich oder alternativ können auch am Trägerring Anschläge angeordnet sein, die mit der Deckscheibe 17 zusammenwirken.

Gemäß einer ersten Ausführungsform der Erfindung kann die Anschubfederung durch (vorzugsweise konische) Schraubendruckfedern 18 gebildet werden, die in einander axial gegenüberliegenden sacklochförmigen Ausnehmungen an den einander zugewandten Stirnseiten des Lagergehäuses 3 sowie des Trägerringes 11 untergebracht sind. Obwohl die zur Schwenkverstellung der Leitschaufeln 9 dienenden Schwenkhebel 12 sowie der Steuerring 13 und damit zusammenwirkende (nicht dargestellte) Stellorgane umfangreiche Störkonturen bilden, die bei der Anordnung der Schraubendruckfedern 18 berücksichtigt werden müssen, können die Schraubendruckfedern 18 ohne weiteres relativ weit radial außen am Trägerring 11 angeordnet werden, so dass die Schraubendruckfedern 18 den Anschlägen 13 radial und in Umfangsrichtung eng benachbart oder auch gemäß einer besonders bevorzugten Ausführungsform gleichachsig zu den Anschlägen 16 angeordnet sind. Hier wirkt sich vorteilhaft aus, dass die Schraubendruckfedern 18 nur einen geringen Unterbringungsraum benötigen und deshalb ohne weiteres zwischen den Schwenkbereichen benachbarter Schwenkhebel 12 angeordnet werden können. Die den Anschlägen 16 radial und in Umfangsrichtung des Trägerrings benachbarte Anordnung der Schraubendruckfedern 18 bietet den Vorteil, dass der Trägerring 11 auch bei höchster thermischer Beanspruchung durch die Andruckkräfte der Schraubendruckfedern 18 und die Gegendruckkräfte der Anschläge 16 praktisch nicht verformt werden kann. Insbesondere kann somit sichergestellt werden, dass die der Deckscheibe 17 zugewandte Stirnseite des Trägerringes 11 exakt parallel zur zugewandten Seite der Deckscheibe 17 bleibt, so dass sowohl die Deckscheibe 17 als auch der Trägerring ständig mit sehr kleinem Spiel an die Seitenränder der Leitschaufeln 9 anschließen können und innerhalb des Radialspaltes 7 allenfalls äußerst kleine, von den Leitschaufeln 9 ungesteuerte Bypass-Ströme der Ab- bzw. Treibgase auftreten können.

Gemäß einer weiteren bevorzugten Ausführungsform der Erfindung können die Schraubendruckfedern 18 entfallen und durch eine Kragfeder 19 ersetzt sein, die mit einem radial inneren ringförmigen Bereich an der turbinenradseitigen Stirnseite des Lagergehäuses 3 abgestützt und mit sternförmig angeordneten Kragarmen gegen eine radial äußere Ringzone des Trägerringes 11 gespannt sind. Da die Kragarme der Kragfeder 19 in Umfangsrichtung des Trägerringes 11 nur wenig Bauraum benötigen, können sie ohne weiteres zwischen den Schwenkbereichen der Schwenkhebel 12 benachbarter Leitschaufeln 9 angeordnet werden.

Die Anordnung der Kragfeder 19 bietet gegenüber den Schraubendruckfedern 18 den Vorteil, dass nur ein einziges Federelement montiert werden muss. Darüber hinaus bietet die Kragfeder 19 in prinzipiell gleicher Weise wie die Schraubendruckfedern 18 den Vorteil, dass ein großer Federhub ermöglicht wird, derart, dass die auf den Trägerring 11 ausgeübten Axialkräfte sich bei einer eventuellen axialen Verlagerung des Trägerringes 11 nur wenig verändern können.

Da weder die Schraubendruckfedern 18 noch die Kragfeder 19 oder Kragfedern eine Dichtung zwischen Lagergehäuse und Trägerring bilden, sondern "offen" sind, ist bevorzugt eine von der Anschubfederung gesonderte Dichtung 15 vorgesehen.

Bei allen Ausführungsformen ist wichtig bzw. vorteilhaft, dass die Dichtung 15 ausschließlich Dichtfunktion hat und deshalb nur mit sehr geringer Kraft gegen den Trägerring 11 gespannt wird, derart, dass die Dichtung sich zwischen Lagergehäuse und Trägerring festhalten kann.

## Patentansprüche

1. Turbolader mit variabler Turbinengeometrie, wobei in einem von Gas durchströmbaren Radialspalt (7) verstellbare Leitschaufeln (9) an einem eine Radialwand des Radialspaltes bildenden Trägerring (11) um zur Ringachse im Wesentlichen parallele Achsen (10) schwenkbar gelagert sind und der axial bewegliche Trägerring (11) von einer Anschubfederung (18 oder 19) axial gegen relativ stationäre Anschläge (16) gespannt wird,
**dadurch gekennzeichnet,**
**dass** die Anschubfederung den Trägerring (11) innerhalb einer den Anschlägen (16) radial benachbarten Ringzone auf der von den Anschlägen abgewandten Seite des Trägerrings (11) beaufschlagt.

2. Turbolader nach Anspruch 1,
**dadurch gekennzeichnet,**
**dass** der Radialspalt (7) konzentrisch zum Turbinenrad (2) angeordnet ist.

3. Turbolader nach Anspruch 1,
**dadurch gekennzeichnet,**
**dass** die Anschubfederung den Trägerring (11) an Positionen beaufschlagt, die den Anschlägen (16) in Umfangsrichtung des Trägerrings (11) benachbart sind.

4. Turbolader nach einem der Ansprüche 1 bis 3,
**dadurch gekennzeichnet,**
**dass** als Anschubfederung eine Kragfederanordnung (19) vorgesehen ist, die mit einem radial inneren Ringscheibenbereich gegen eine Gehäusefläche eines Lagergehäuses (3) und mit sternförmig am Ringbereich angeordneten blattfederartigen radialen Kragarmen gegen den Trägerring (11) gespannt ist.

5. Turbolader nach Anspruch 4,
**dadurch gekennzeichnet,**
**dass** die Kragarme in Umfangsrichtung des Trägerrings (11) jeweils zwischen benachbarten Schwenkachsen (10) der Leitschaufeln (9) angeordnet sind.

6. Turbolader nach einem der Ansprüche 1 bis 5,
**dadurch gekennzeichnet,**
**dass** auf der dem Radialspalt (7) zugewandten Seite der Kragfeder (19) axial vor deren Ringbereich eine ringscheibenförmige Dichtung (15) zwischen einander zugewandten gehäuseseitigen und trägerringseitigen Ringflächen angeordnet ist.

7. Turbolader nach einem der Ansprüche 1 bis 6,
**dadurch gekennzeichnet,**
**dass** als Anschubfederung Schraubendruckfedern (18) an einer radial äußeren Ringzone des Trägerrings (11) angeordnet sind.

8. Turbolader nach Anspruch 7,
**dadurch gekennzeichnet,**
**dass** nichtzylindrische Schraubendruckfedern (18) vorgesehen sind.

9. Turbolader nach einem der Ansprüche 1 bis 8,
**dadurch gekennzeichnet,**
**dass** zwischen einer Gehäusefläche eines Lagergehäuses (3) und der von den Leitschaufeln (9) abgewandten Seite des Trägerrings (11) eine Dichtung (15) angeordnet ist, die den Trägerring (11) mit im Vergleich zur Anschubfederung (18, 19) sehr schwacher Kraft beaufschlagt.

## Claims

1. Turbo charger with variable turbine geometry, wherein in a radial gap (7), which is flowed through by gas, adjustable guide vanes (9) are mounted pivotably on a support ring (11) forming a radial wall of the radial gap about axes (10) that are essentially parallel to the ring axis and the axially movable support ring (11) is tensioned axially by a push spring (18 or 19) against relatively stationary stops (16), **characterised in that** the push spring charges the support ring (11) within a ring area radially adjacent to the stops (16) on the side of the support ring (11) facing away from the stops.

2. Turbo charger according to claim 1, **characterised in that** the radial gap (7) is arranged concentrically relative to the turbine wheel (2).

3. Turbo charger according to claim 1, **characterised in that** the push spring loads the support ring (11) in positions which are adjacent to the stops (16) in circumferential direction of the support ring (11).

4. Turbo charger according to any one of claims 1 to 3, **characterised in that** as a push spring a cantilever spring arrangement (19) is provided, which is tensioned against the support ring (11) by a radially inner ring disc area against a housing surface of a bearing housing (3) and by leaf spring-like radial cantilever arms arranged in a star-shape on the ring area.

5. Turbo charger according to claim 4, **characterised in that** the cantilever arms are arranged in circumferential direction of the support ring (11) respectively between adjacent pivot axes (10) of the guide vanes (9).

6. Turbo charger according to any one of claims 1 to 5, **characterised in that** on the side of the cantilever spring (19) facing the radial gap (7) axially in front of its ring area a ring discshaped seal (15) is arranged between facing housing side and support ring-side ring surfaces.

7. Turbo charger according to any one of claims 1 to 6, **characterised in that** as a push spring helical compression springs (18) are arranged on a radially outer ring area of the support ring (11).

8. Turbo charger according to claim 7, **characterised in that** non-cylindrical helical compression springs (18) are provided.

9. Turbo charger according to any one of claims 1 to 8, **characterised in that** between a housing surface of a bearing housing (3) and the side of the support ring (11) facing away from the guide vanes (9) a seal (15) is arranged which charges the support ring (11) with a very weak force compared to the push spring (18, 19).

## Revendications

1. Turbosoufflante dotée d'une géométrie de turbine variable, où des aubes directrices (9) mobiles dans une fente radiale (7) pouvant être traversée par un gaz sont montées sur une bague de support (11) formant une paroi radiale de la fente radiale de manière à pouvoir pivoter autour d'axes (10) sensiblement parallèles à l'axe annulaire et la bague de support (11) mobile axialement est serrée axialement par une suspension à poussée (18 ou 19) contre des butées (16) relativement fixes ;
**caractérisée en ce**
**que** la suspension à poussée sollicite la bague de support (11) à l'intérieur d'une zone annulaire voisine radialement des butées (16) sur la face de la bague de support (11) opposée aux butées.

2. Turbosoufflante selon la revendication 1,
**caractérisée en ce**
**que** la fente radiale (7) est disposée de manière concentrique par rapport à la roue de turbine (2).

3. Turbosoufflante selon la revendication 1,
**caractérisée en ce**
**que** la suspension à poussée sollicite la bague de support (11) en des positions qui sont voisines des butées (16) dans la direction périphérique de la bague de support (11).

4. Turbosoufflante selon l'une quelconque des revendications 1 à 3,
**caractérisée en ce**
**qu'**un système de ressort en porte-à-faux (19), qui est serré contre une surface de logement d'un logement de roulement (3) au moyen d'une zone de disque annulaire radialement interne et contre la bague de support (11) au moyen de bras en porte-à-faux radiaux du type ressorts à lames disposés en étoile sur la zone annulaire, est prévu comme suspension à poussée.

5. Turbosoufflante selon la revendication 4,
**caractérisée en ce**
**que** les bras en porte-à-faux sont disposés dans la direction périphérique de la bague de support (11) respectivement entre des axes de pivotement (10) voisins des aubes directrices (9).

6. Turbosoufflante selon l'une quelconque des revendications 1 à 5,
**caractérisée en ce**
**que**, sur la face du ressort en porte-à-faux (19) tournée vers la fente radiale (7), axialement devant la zone annulaire, un joint (15) en forme de disque annulaire est disposé entre des surfaces annulaires côté logement et côté bague de support tournées les unes vers les autres.

7. Turbosoufflante selon l'une quelconque des revendications 1 à 6,
**caractérisée en ce**
**que** des ressorts hélicoïdaux de compression (18) faisant office de suspension à poussée sont disposés sur une zone annulaire de la bague de support (11) radialement extérieure.

8. Turbosoufflante selon la revendication 7,
**caractérisée en ce**
**que** des ressorts hélicoïdaux de compression (18) non cylindriques sont présents.

9. Turbosoufflante selon l'une quelconque des revendications 1 à 8,
**caractérisée en ce**
**qu'**un joint (15), qui sollicite la bague de support (11) avec une force très faible en comparaison de la suspension à poussée (18, 19), est disposé entre une surface de logement d'un logement de roulement (3) et la face de la bague de support (11) opposée aux aubes directrices (9).
